# EUROPÄISCHE PATENTSCHRIFT

(11) **EP 2 153 717 B1**
(45) Veröffentlichungstag und Bekanntmachung des Hinweises auf die Patenterteilung: **10.10.2012**
(21) Anmeldenummer: 09008580.4
(22) Anmeldetag: 30.06.2009
(51) Int. Cl.: A01K 11/00

(54) **Kennzeichnungs- und Probenahmevorrichtung für Tiere**
Identification and sampling device for animals
Dispositif de caractérisation et de prélèvement d'échantillon pour animaux

(30) Priorität: 25.07.2008 DE 102008034677
(43) Veröffentlichungstag der Anmeldung: 17.02.2010
(73) Patentinhaber: Gepe-Geimuplast GmbH, 82490 Farchant (DE)
(72) Erfinder: Gottschling, Richard, 82481 Mittenwald (DE)
(74) Vertreter: Zinnecker, Armin

(56) Entgegenhaltungen:
- WO-A-2006/000869
- WO-A-2007/013820
- DE-U1-202004 011 020
- US-A- 1 385 530
- US-A1- 2002 137 033
- US-B1- 6 659 338

## Beschreibung

Die Erfindung betrifft eine Kennzeichnungs- und Probenahmevorrichtung zum Markieren eines Tieres und zum Entnehmen und Aufbewahren einer Gewebeprobe eines Tieres. Die Erfindung betrifft ferner eine Zange zum Verbinden einer Ohrmarke und zum Entnehmen einer Gewebeprobe.

Tiere, insbesondere Rinder, müssen zu verschiedenen Zwecken markiert werden. Zum Markieren eines Tieres können Ohrmarken verwendet werden, die ein Dornteil und ein Lochteil aufweisen. Eine derartige Ohrmarke ist aus der DE 20 2004 011 020 U1 bekannt. Das Dornteil weist einen Schaft und eine Spitze auf. Das Lochteil ist mit dem Dornteil verrastbar. Bei der Anbringung der Ohrmarke werden das Dornteil und das Lochteil auf verschiedenen Seiten des Ohres des Tieres positioniert. Beim Verbinden der Teile durchstößt die Spitze des Dornteils das Gewebe. Wenn die Spitze das Lochteil vollständig durchdrungen hat, verrastet sie mit diesem. Das Ohr oder das sonstige Gewebeteil des Tieres befindet sich dann im Bereich des Schaftes des Dornteils.

In vielen Anwendungsfällen ist es erforderlich, eine Gewebeprobe eines Tieres, insbesondere eines Rindes, zu entnehmen. Vorrichtungen zum Entnehmen einer Gewebeprobe eines Tieres sind aus der erwähnten DE 20 2004 011 020 U1, aus der EP 1 014 861 B1 und aus der EP 1 088 212 B1 bekannt.

Aufgabe der Erfindung ist es, eine verbesserte Kennzeichnungs- und Probenahmevorrichtung der eingangs angegebenen Art vorzuschlagen. Eine weitere Aufgabe der Erfindung besteht darin, eine verbesserte Zange zum Verbinden einer Ohrmarke und zum Entnehmen einer Gewebeprobe vorzuschlagen.

Erfindungsgemäß wird diese Aufgabe bei einer Kennzeichnungs- und Probenahmevorrichtung durch die Merkmale des Anspruchs 1 gelöst. Die Kennzeichnungs- und Probenahmevorrichtung umfaßt eine Ohrmarke und einen Probebehälter. Die Ohrmarke umfaßt ein Dornteil und ein Lochteil. Das Dornteil weist einen Schaft und eine Spitze auf. Das Lochteil ist mit dem Dornteil verrastbar. Der Probebehälter weist einen Aufnahmeraum für die Probe und ein Stanzteil auf. Bei der Anbringung der Ohrmarke und beim Entnehmen der Gewebeprobe sind die Ohrmarke und der Probebehälter voneinander getrennt.

Vorteilhafte Weiterbildungen sind in den Unteransprüchen beschrieben.

Vorzugsweise weist der Probebehälter ein Stützteil auf. Das Stützteil dient zum Abstützen des Probebehälters an einer Zange. Unter einer Zange wird im Rahmen der Erfindung ein Anbringungswerkzeug für die Ohrmarke verstanden. Durch das Stützteil kann der Probebehälter an der Zange abgestützt werden.

Vorzugsweise ist das Stützteil von dem Probebehälter abtrennbar. Das Stützteil kann dazu dienen, den Probebehälter vor der Entnahme der Probe in der Zange abzustützen. Während oder nach dem Entnehmen der Probe kann das Stützteil von dem Probebehälter abgetrennt werden. Die Abtrennung des Stützteils von dem Probebehälter erfolgt vorzugsweise durch das Schließen der Zange.

Vorteilhaft ist es, wenn an dem Stützteil eine Verschlußkappe für den Probebehälter vorgesehen ist. Nach der Entnahme der Probe kann der Probebehälter durch die Verschlußkappe verschlossen werden.

Nach einer weiteren vorteilhaften Weiterbildung weist der Probebehälter einen Anschlag auf. Der Anschlag befindet sich vorzugsweise an der Außenseite des Probebehälters. Vorteilhaft ist es, wenn der Anschlag dazu dient, die Bewegung des Probebehälters in der Zange zu begrenzen.

Das Dornteil und/oder der Probebehälter und/oder das Lochteil können in eine Zange einlegbar sein. Vorzugsweise sind das Dornteil einerseits und der Probebehälter und/oder das Lochteil andererseits in verschiedene Arme einer zweiarmigen Zange einlegbar.

Vorteilhaft ist es, wenn das Lochteil an den Probebehälter anlegbar ist. Bei der Verwendung der Kennzeichnungs- und Probenahmevorrichtung können das Dornteil und der Probebehälter in die Zange eingelegt werden. Das Lochteil kann an den Probebehälter angelegt werden, so daß dann alle drei Teile relativ zueinander und zu der Zange korrekt positioniert sind.

Die der Erfindung zugrundeliegende Aufgabe wird bei einer Zange zum Verbinden einer erfindungsgemäßen Ohrmarke und zum Entnehmen einer Gewebeprobe mittels eines erfindungsgemäßen Probebehälters dadurch gelöst, daß die Zange eine Aufnahme für das Dornteil und eine Aufnahme für den Probebehälter aufweist.

Vorteilhaft ist es, wenn die Zange eine Aufnahme für das Lochteil aufweist. Es ist dann möglich, die Zange auch dann zu verwenden, wenn lediglich eine Ohrmarke angebracht werden soll, jedoch keine Probenentnahme erfolgen soll.

Ein Ausführungsbeispiel der Erfindung wird nachstehend anhand der beigefügten Zeichnung im einzelnen erläutert. In der Zeichnung zeigt
- Fig. 1: eine Zange, in die ein Probebehälter eingelegt ist, in einer Seitenansicht, teilweise im Schnitt,
- Fig. 2: die Zange gemäß Fig. 1, in die ein Probebehälter und ein Lochteil einer Ohrmarke eingelegt sind, in einer Seitenansicht, teilweise im Schnitt,
- Fig. 3: die Zange gemäß Fig. 1 und 2, in die zusätzlich ein Dornteil einer Ohrmarke eingelegt ist, in einer Seitenansicht, teilweise im Schnitt,
- Fig. 4: den Probebehälter, das Lochteil und das Dornteil gemäß Fig. 3 in einer vergrößerten Darstellung,
- Fig. 5: die Teile gemäß Fig. 4 nach dem Durchstoßen des Ohres und der Entnahme einer Probe,
- Fig. 6: die Teile gemäß Fig. 4 und 5 nach dem Verbinden der Ohrmarke,
- Fig. 7: den Probebehälter in einer Seitenansicht und einer Ansicht von oben,
- Fig. 8: einen Schnitt durch den Probebehälter gemäß Fig. 7 vor dem Verschließen mit einer Verschlußkappe,
- Fig. 9: den Probebehälter gemäß Fig. 7 und 8 nach dem Verschließen mit der Verschlußkappe,
- Fig. 10: einen Teil der Zange mit eingelegtem Dornteil und Lochteil ohne Probebehälter in einer der Fig. 4 entsprechenden Schnittansicht und
- Fig. 11: das Dornteil und das Lochteil der Fig. 10 nach dem Verbinden.

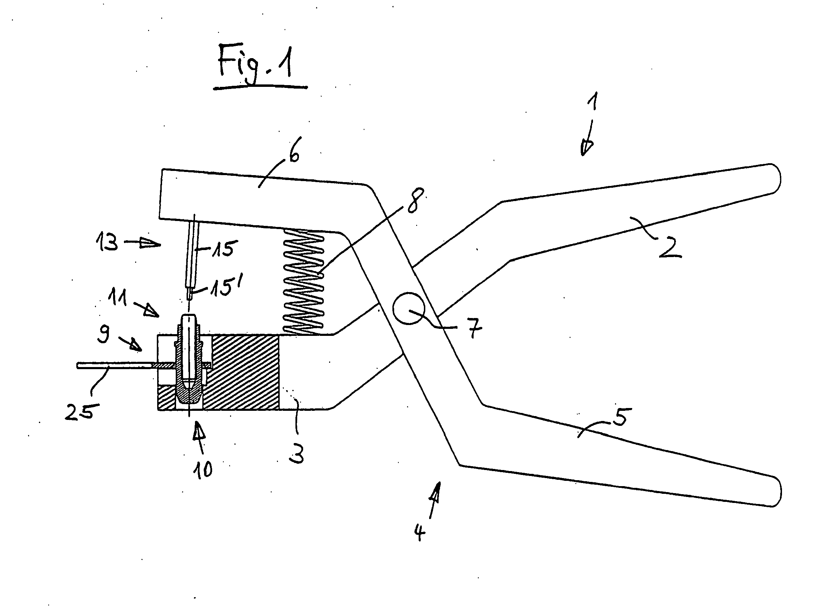

Fig. 1 - 3 zeigen eine Zange, also ein Anbringungswerkzeug für eine Ohrmarke, in einer Seitenansicht. Die Zange umfaßt einen ersten Hebel 1 mit einem oberen Griffteil 2 und einem unteren Arm 3 und einen zweiten Hebel 4 mit einem unteren Griffteil 5 und einem oberen Arm 6. Die Hebel 1 und 4 sind durch eine Achse 7 gelenkig miteinander verbunden und durch eine Druckfeder 8, die zwischen den Armen 3, 6 vorgesehen ist, zur geöffneten Stellung hin vorbelastet.

Der untere Arm 3 der Zange weist eine Aufnahme 9 für einen Probebehälter 10 und eine Aufnahme 11 für ein Lochteil 12 auf. Das Lochteil 12 ist an den Probebehälter 10 angelegt, und zwar in der Weise, daß das Loch des Lochteils 12 auf das obere Ende des Probebehälters 10 aufgesteckt ist. Der obere Arm 6 der Zange weist eine Aufnahme 13 für ein Dornteil 14 auf. Die Aufnahme 13 ist als Stift 15 ausgestaltet. Das Dornteil 14 umfaßt einen Schaft 16, eine Spitze 17 und ein Flächenteil 18, an dem eine Markierung vorgesehen sein kann, beispielsweise ein alphanumerischer Text und/oder ein Barcode und/oder eine oder mehrere sonstige Markierungen und/oder Datenträger. Das Lochteil 12 umfaßt ebenfalls ein Flächenteil 19, an dem ebenfalls Markierungen und/oder Datenträger vorgesehen sein können.

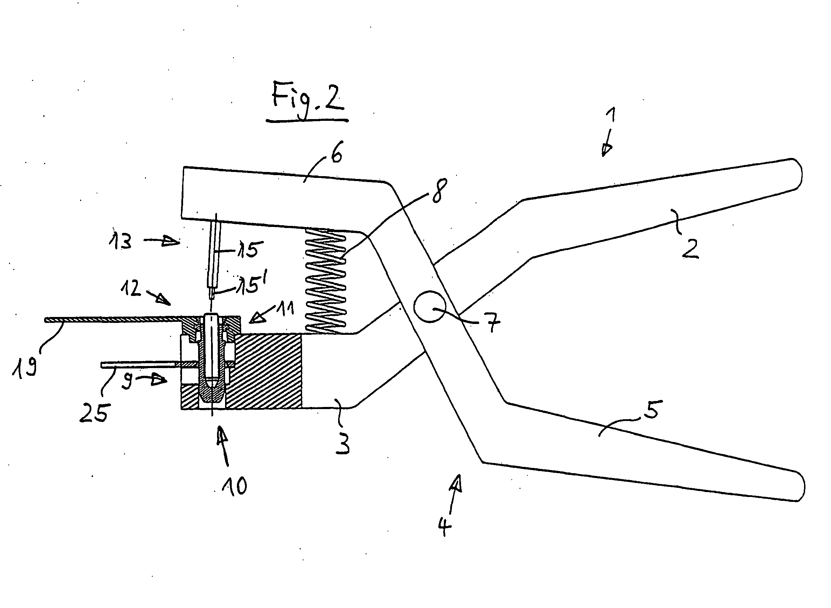

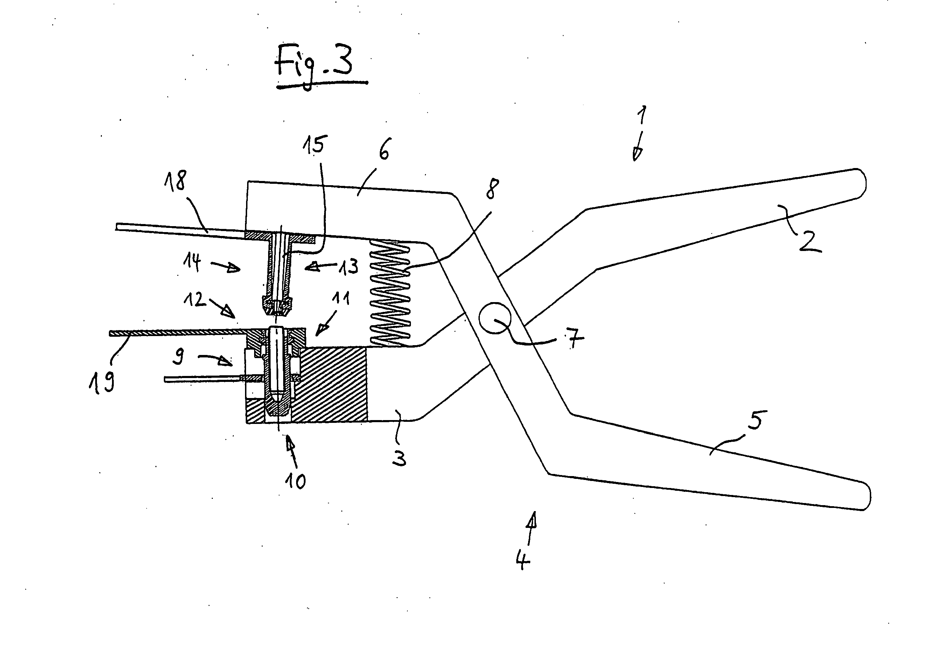

Fig. 1 bis 3 zeigen den zeitlichen Ablauf bei der Anwendung der Kennzeichnungs- und Probenahmevorrichtung. Zunächst wird der Probebehälter 10 in die Aufnahme 9 im unteren Arm 3 der Zange eingelegt, wie in Fig. 1 dargestellt. Anschließend wird das Lochteil 12 in die Aufnahme 11 im unteren Arm 3 der Zange eingelegt, wie in Fig. 2 gezeigt. Dabei wird das Lochteil 12 gleichzeitig an den Probebehälter 10 angelegt. Dies geschieht dadurch, daß das Lochteil 12 von oben auf den Probebehälter 10 aufgesteckt wird. Währenddessen oder vorher oder nachher wird das Dornteil 14 in die Aufnahme 13 im oberen Arm 6 der Zange eingelegt, wie in Fig. 3 gezeigt. In der Darstellung der Fig. 3 sind Probebehälter 10, Lochteil 12 und Dornteil 14 relativ zueinander und zu der Zange korrekt positioniert.

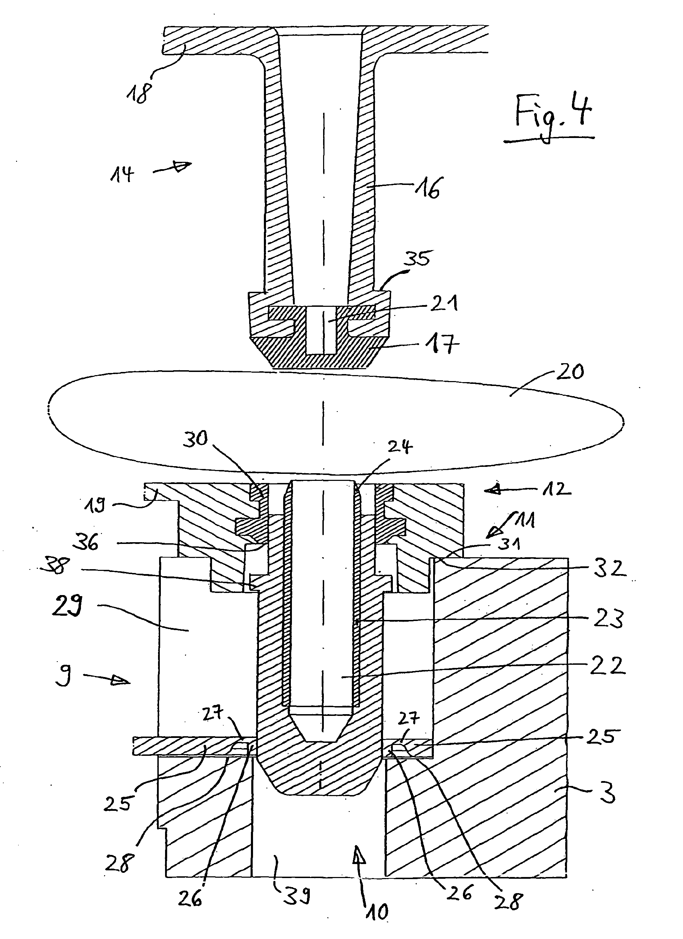

Fig. 4 zeigt den Probebehälter 10, das Lochteil 12 und das Dornteil 14 in der Positionierung gemäß Fig. 3 in einer vergrößterten Darstellung. Ein Teil des Ohres 20 eines Tieres, beispielsweise eines Rindes, liegt zwischen der Spitze 17 des Dornteils 14 einerseits und dem Lochteil 12 und dem oberen Ende des Probebehälters 10 andererseits.

Das Flächenteil 18 und der Schaft 16 des Dornteils 14 sind aus Kunststoff hergestellt. Die Spitze 17 ist aus einem harten Kunststoff und/oder aus Metall oder einem Verbundmaterial hergestellt. Der Schaft 16 ist hohl, so daß der Stift 15 der Aufnahme 13 in ihm aufgenommen werden kann. In der Spitze 17 ist eine Vertiefung 21 vorgesehen, die einen Sitz für das Ende 15' des Stiftes 15 bildet.

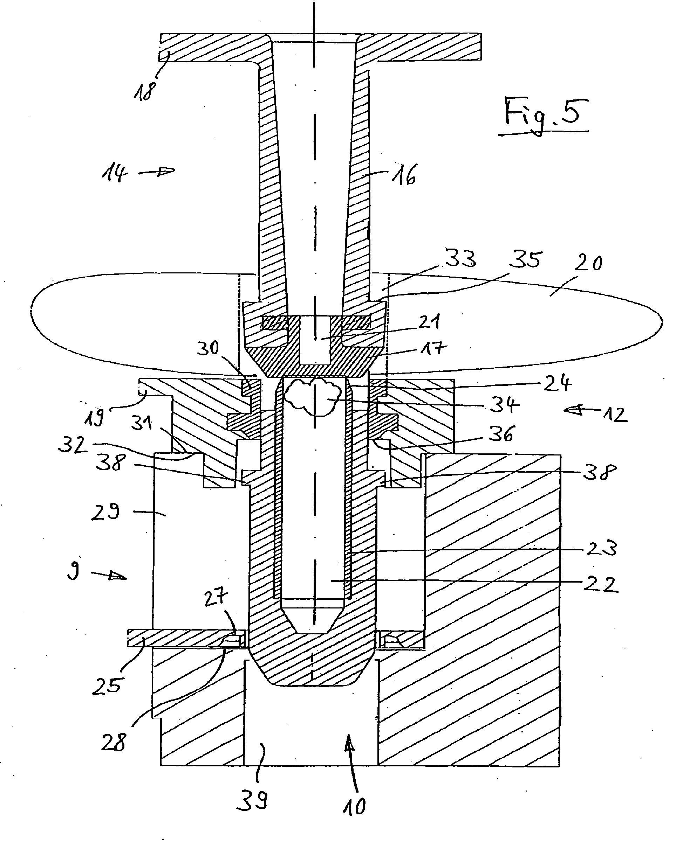

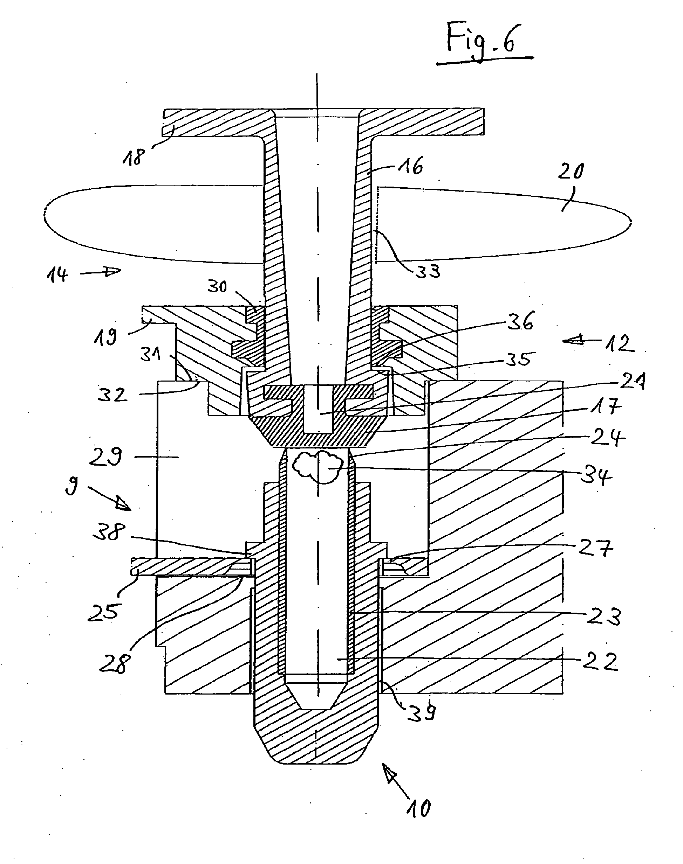

Der Probebehälter 10 umfaßt einen Aufnahmeraum 22 für eine Probe 34 (Fig. 5 und 6) und ein Stanzteil 23. Der Probebehälter 10 ist unten geschlossen und oben offen. Das Stanzteil 23 ist als Hülse ausgebildet, die einen Teil des Aufnahmeraums 22 begrenzt und die an ihrem oberen Ende eine Schneide 24 aufweist, die oben aus dem Probebehälter 10 herausragt.

Der Probebehälter 10 weist ferner ein Stützteil 25 auf, das mit dem Probebehälter 10 in dessen unteren Bereich verbunden ist. Die Verbindung erfolgt über ein mit dem Probebehälter 10 verbundenes Hülsenteil 26, an das sich einer oder mehrere dünne Stege 27 anschließen, die dann in einen breiteren Bereich übergehen. Die Aufnahme 9 für den Probebehälter 10 weist einen Absatz 28 auf, auf dem das Stützteil 25 aufliegt. Der Probebehälter 10 kann durch einen Schlitz 29 seitlich in die Aufnahme 9 eingelegt werden.

Das Lochteil 12 ist aus Kunststoff hergestellt. Es weist ein Gegenlager 30 für die Spitze 17 des Dornteils 14 auf. Das Gegenlager 30 ist im wesentlichen hülsenförmig. Es ist aus einem harten Kunststoff und/oder aus Metall oder einem Verbundmaterial hergestellt und mit dem Lochteil 12 verbunden. Das Gegenlager 30 weist eine im wesentlichen kreiszylinderförmige Durchgangsöffnung auf.

Das Lochteil weist an seiner der Aufnahme 11 zugewandten Seite einen Absatz 31 auf, der auf einem Absatz 32 der Aufnahme 9 im unteren Arm 3 der Zange aufliegt. Der Innendurchmesser des Gegenlagers 30 des Lochteils 12 entspricht im wesentlichen dem Außendurchmesser des Probebehälters 10 in dessen oberen Bereich.

Wenn die Zange durch Zusammendrücken der Griffteile 2, 5 betätigt wird, werden auch ihre Arme 3, 6 aufeinander zu bewegt. Durch diese Bewegung wird das Gewebe des Ohres 20 von der Spitze 17 des Dornteils 14 durchstoßen, so daß in diesem Gewebe ein Kanal 33 gebildet wird. Auf diese Weise gelangt das dem Lochteil 12 und dem Probebehälter 10 zugewandte Ende der Spitze 17 des Dornteils 14 mit der Schneide 24 des Stanzteils 23 des Probebehälters 10 in Anlage, wie in Fig. 5 gezeigt. Die Spitze 17 hat während der erwähnten Bewegung eine Probe 34 aus dem Ohr 18 entnommen, die durch diese Bewegung in den Aufnahmeraum 22 des Probebehälters 10 eingeführt wird.

Durch das weitere Schließen der Zange wird das Dornteil 14 weiter nach unten bewegt. Die Spitze 17 durchdringt das Gegenlager 30. An der Rückseite der Spitze 17 ist in dem Schaft 16 ein nach innen weisender Absatz 35 vorgesehen, der nach dem Durchdringen des Gegenlagers 30 mit einem Absatz 36 verrastet, der vom unteren Ende des Gegenlagers 30 gebildet wird. Auf diese Weise verrastet das Dornteil 14 mit dem Lochteil 12, wie in Fig. 6 dargestellt.

Während dieser Abwärtsbewegung drückt die Spitze 17 die Schneide 24 des Stanzteils 23 und mit diesem den Probebehälter 10 nach unten in die Aufnahme 9 hinein. Bei dieser Bewegung reißen die Stege 27 des Stützteils 25 ab. Nach dem Abreißen der Stege 27 kann der Probebehälter 10 weiter nach unten in die Aufnahme 9 hineinbewegt werden, wie ebenfalls in Fig. 6 gezeigt. Zur Begrenzung dieser Bewegung weist der Probebehälter 10 einen Anschlag 38 auf. Der Anschlag 38 ist an der Außenseite des Probebehälters 10 vorgesehen. In der Endstellung liegt der Anschlag 38 auf dem Stützteil 25 auf.

Fig. 6 zeigt die Lage der Teile bei geschlossener Zange. Wenn die Zange wieder geöffnet wird, kann die Ohrmarke, die aus dem Lochteil 12 und dem mit diesem verrasteten Dornteil 14 besteht, von der Zange gelöst werden. Ferner ist es dann möglich, den Probebehälter 10, in dem sich die Probe 34 befindet, aus der Aufnahme 9 der Zange herauszunehmen.

Die Aufnahme 9 für den Probebehälter umfaßt ein unteres Loch oder Durchgangsloch 39, dessen Durchmesser zumindest geringfügig größer ist als der Außendurchmesser des Probebehälters 10, um die Bewegung des Probebehälters 10 in dieses Loch 39 hinein zu ermöglichen, wie in Fig. 6 gezeigt. Die Aufnahme 9 umfaßt ferner den Schlitz 29 und den Absatz 28. Die Aufnahme 11 für das Lochteil 12 umfaßt den Absatz 32.

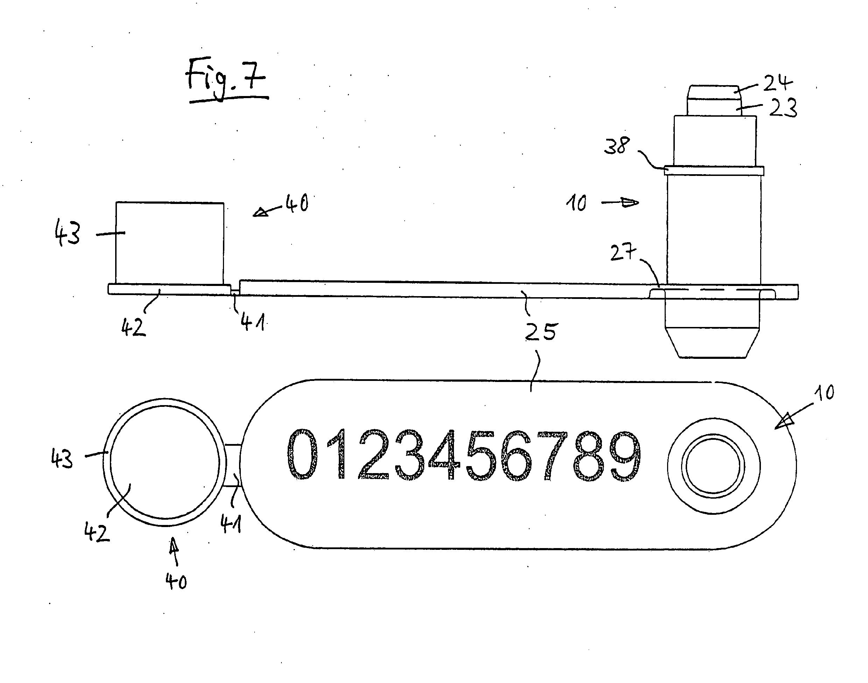

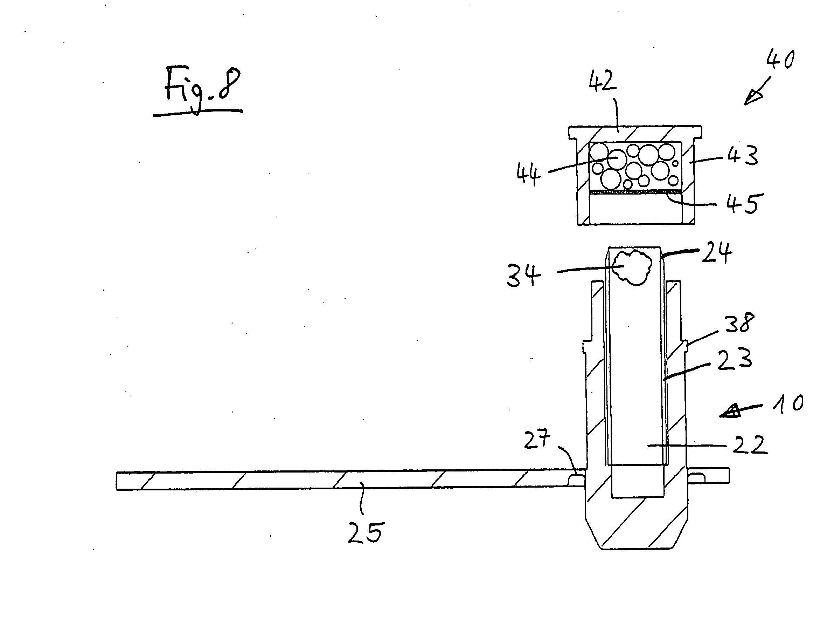

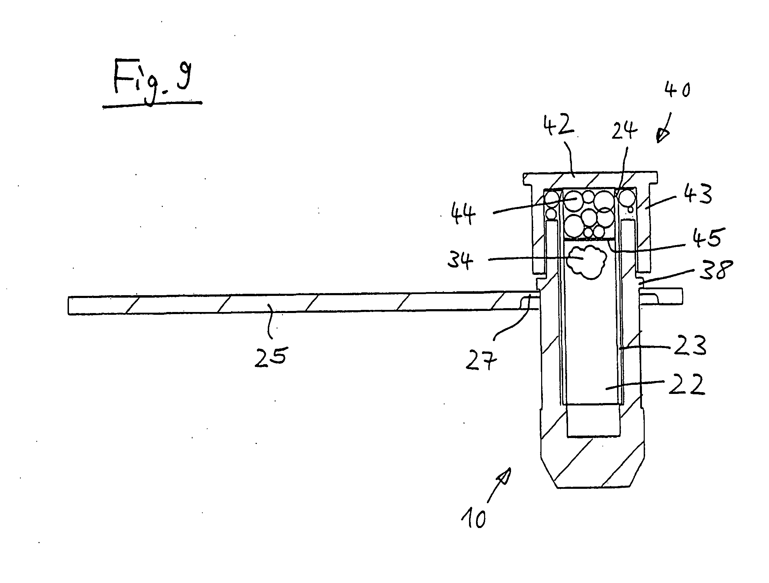

Wie aus Fig. 7 bis 9 ersichtlich ist an dem Stützteil 25 eine Verschlußkappe 40 für den Probebehälter 10 vorgesehen. Die Verschlußkappe 40 ist mit dem Stützteil 25 an dessen dem Probebehälter 10 abgewandten Ende über einen abreißbaren Steg 41 verbunden. Die Verschlußkappe 40 besteht in der aus Fig. 8 und 9 ersichtlichen Weise aus einem Boden 42 und einer zylindrischen Wand 43. In der Verschlußkappe 40 ist ein chemischer Wirkstoff 44 vorhanden, der zwischen dem Boden 42, der zylindrischen Wand 43 und einer Membran 45 eingeschlossen ist. Die Membran 45 ist an der zylindrischen Wand 43 befestigt. Wenn die Verschlußkappe auf das obere, offene Ende des Probebehälters 10 aufgesteckt wird, durchstößt die Schneide 24 des Stanzteils 23 die Membran 45, wie in Fig. 9 gezeigt. Der chemische Wirkstoff 44 bleibt zwischen dem Boden 42, der Membran 45 und einem Teil der Seitenwand 43 des Stanzteils 23 eingeschlossen. Gleichwohl kann er von dort auf die Probe 34 einwirken. Der chemische Wirkstoff 44 kann in körniger, rieselfähiger Form oder in flüssiger, gelförmiger Form oder in anderer Form vorliegen. Insbesondere handelt es sich um einen Wirkstoff, der konservierend auf die Probe 34 einwirkt.

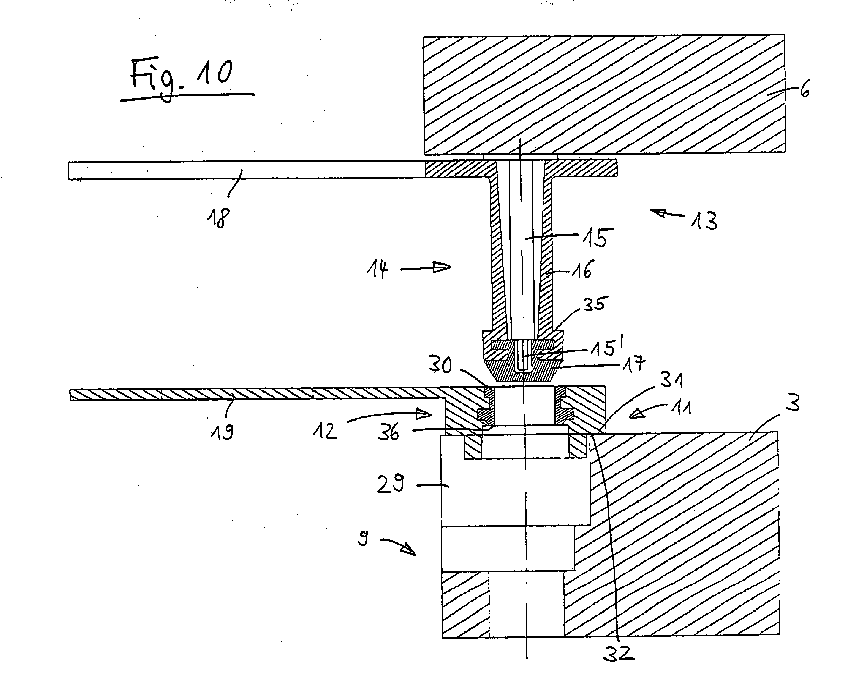

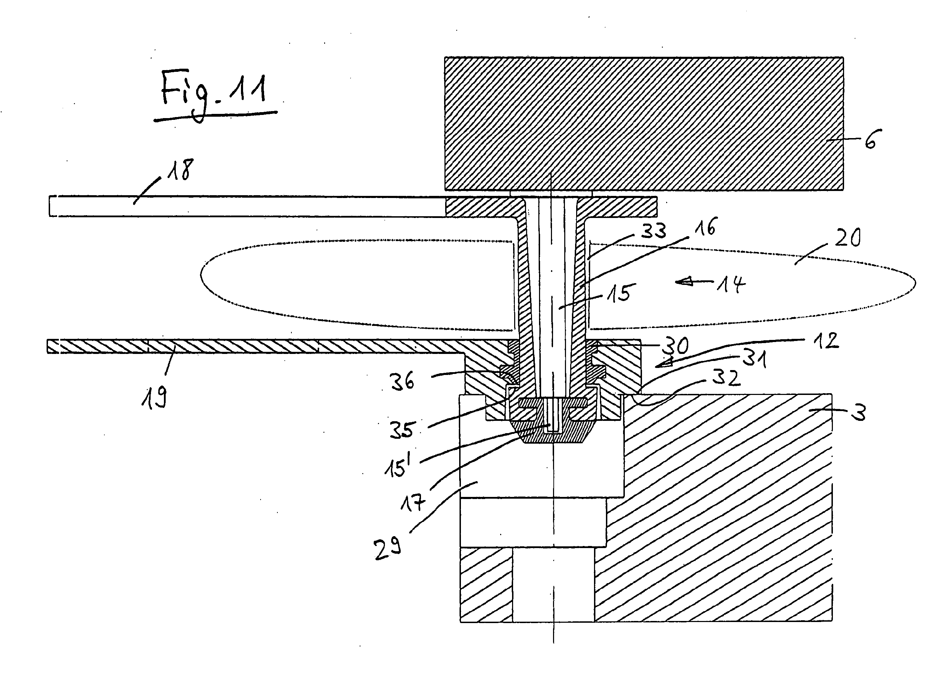

Fig. 10 und 11 zeigen, daß die Zange auch ohne Probebehälter verwendet werden kann. Wenn keine Probenahme erforderlich ist, wird das Lochteil 12 in die Aufnahme 11 eingelegt, und das Dornteil 14 wird in die Aufnahme 13 eingelegt, wie in Fig. 10 gezeigt. Danach kann die Zange geschlossen werden, so daß die Spitze 17 das Gegenlager 30 durchdringt und mit diesem verrastet, wie in Fig. 11 gezeigt. Auf diese Weise wird die Ohrmarke, die aus dem Lochteil 12 und dem Dornteil 14 besteht, hergestellt. Durch das Öffnen der Zange wird die Ohrmarke freigegeben. Sie bleibt dann im Ohr 20 des Tieres.

Das Lochteil 12, das Dornteil 14 und der Probebehälter 10 können Markierungen und/oder Datenträger aufweisen. Vorteilhaft ist es, wenn diese Teile dieselbe Markierung und/oder einen Datenträger mit denselben Daten aufweisen. Dann ist gewährleistet, daß die Probe 34 in dem Probebehälter 10 eindeutig einer bestimmten Ohrmarke 12, 14 zugeordnet werden kann.

Durch die Erfindung wird eine Kennzeichnungs- und Probenahmevorrichtung für Tiere geschaffen, die eine zweiteilige Ohrmarke und einen als separates Teil ausgebildeten Probebehälter umfaßt. Dabei kann der Probebehälter die gleiche Kennzeichnung wie die Ohrmarke haben. Die Ohrmarke besteht aus einem Lochteil und einem Dornteil. Der Probebehälter enthält eine Stanzvorrichtung, die aus einem angeschliffenen Rohr, insbesondere aus Metall, bestehen kann. Bei der Probenentnahme wird der Probebehälter in die Zange eingelegt. Das Dornteil wird in den anderen Arm der Zange eingelegt. Das Lochteil wird auf den Probebehälter gesteckt, wodurch es zentriert werden kann. Das Lochteil kann lose auf den Probebehälter gesteckt werden. Es ist allerdings auch möglich, zwischen dem Probebehälter und dem Lochteil eine Klemmpassung vorzusehen. Beim Schließen der Zange preßt die Spitze des Dornteils das Ohr des Tieres gegen das Stanzteil des Probebehältes. Dabei wird ein Gewebestück als Probe in das innen hohle Stanzteil geschoben. Danach verrastet das Dornteil mit dem Lochteil, wodurch die Ohrmarke gebildet wird. Gleichzeitig wird der Probebehälter wieder vom Lochteil getrennt. Er verbleibt in der Zange, aus der er nach dem Öffnen der Zange wieder entnommen werden kann.

## Patentansprüche

1. Kennzeichnungs- und Probenahmevorrichtung, insbesondere für Tiere, umfassend
eine Ohrmarke mit einem Dornteil (14), das einen Schaft (16) und eine Spitze (17) aufweist, und mit einem Lochteil (12), das mit dem Dornteil (14) verrastbar ist,
und einen als separates Teil ausgebildeten Probebehälter (10), der einen Aufnahmeraum (22) für die Probe (34) und ein Stanzteil (23) aufweist.

2. Kennzeichnungs- und Probenahmevorrichtung nach Anspruch 1, **dadurch gekennzeichnet, daß** der Probebehälter (10) ein Stützteil (25) aufweist.

3. Kennzeichnungs- und Probenahmevorrichtung nach Anspruch 2, **dadurch gekennzeichnet, daß** das Stützteil (25) von dem Probebehälter (10) abtrennbar ist.

4. Kennzeichnungs- und Probenahmevorrichtung nach Anspruch 2 oder 3, **dadurch gekennzeichnet, daß** an dem Stützteil (25) eine Verschlußkappe (40) für den Probebehälter (10) vorgesehen ist.

5. Kennzeichnungs- und Probenahmevorrichtung nach einem der vorhergehenden Ansprüche, **dadurch gekennzeichnet, daß** der Probebehälter (10) einen Anschlag (38) aufweist.

6. Kennzeichnungs- und Probenahmevorrichtung nach einem der vorhergehenden Ansprüche, **dadurch gekennzeichnet, daß** das Dornteil (14) in eine Zange einlegbar ist.

7. Kennzeichnungs- und Probenahmevorrichtung nach einem der vorhergehenden Ansprüche, **dadurch gekennzeichnet, daß** der Probebehälter (10) in eine Zange einlegbar ist.

8. Kennzeichnungs- und Probenahmevorrichtung nach einem der vorhergehenden Ansprüche, **dadurch gekennzeichnet, daß** das Lochteil (12) in eine Zange einlegbar ist.

9. Kennzeichnungs- und Probenahmevorrichtung nach einem der vorhergehenden Ansprüche, **dadurch gekennzeichnet, daß** das Lochteil (12) an den Probebehälter (10) anlegbar ist.

10. Zange zum Verbinden einer Ohrmarke (12, 14) nach einem der vorhergehenden Ansprüche und zum Entnehmen einer Gewebeprobe (34) mittels eines Probebehälters (10) nach einem der vorhergehenden Ansprüche
mit einer Aufnahme (13) für das Dornteil (14) und einer Aufnahme (9) für den Probebehälter (10).

11. Zange nach Anspruch 10, **gekennzeichnet durch** eine Aufnahme (11) für das Lochteil (12).

## Claims

1. An identification and sampling device, in particular for animals, comprising
an ear tag with a male part (14), which includes a shaft (16) and a tip (17), and with a female part (12), which can be latched with the male part (14),
and a sample container (10) formed as separate part, which includes a receiving space (22) for the sample (34) and a punch (23).

2. The identification and sampling device according to claim 1, **characterized in that** the sample container (10) includes a supporting member (25).

3. The identification and sampling device according to claim 2, **characterized in that** the supporting member (25) can be separated from the sample container (10).

4. The identification and sampling device according to claim 2 or 3, **characterized in that** an end cap (40) for the sample container (10) is provided on the supporting member (25).

5. The identification and sampling device according to any of the preceding claims, **characterized in that** the sample container (10) includes a stop (38).

6. The identification and sampling device according to any of the preceding claims, **characterized in that** the male part (14) can be inserted into a pair of tongs.

7. The identification and sampling device according to any of the preceding claims, **characterized in that** the sample container (10) can be inserted into a pair of tongs.

8. The identification and sampling device according to any of the preceding claims, **characterized in that** the female part (12) can be inserted into a pair of tongs.

9. The identification and sampling device according to any of the preceding claims, **characterized in that** the female part (12) can be put against the sample container (10).

10. Tongs for connecting an ear tag (12, 14) according to any of the preceding claims and for taking a tissue sample (34) by means of a sample container (10) according to any of the preceding claims,
comprising a receptacle (13) for the male part (14) and a receptacle (9) for the sample container (10).

11. The tongs according to claim 10, **characterized by** a receptacle (11) for the female part (12).

## Revendications

1. Dispositif de caractérisation et de prélèvement d'échantillons, notamment pour animaux, comprenant
une boucle auriculaire avec une pièce à poinçon (14), qui présente une tige (16) et une pointe (17), et avec une pièce perforatrice (12), qui est enclenchable avec la pièce à poinçon (14),
et un récipient d'échantillons (10) constitué comme pièce séparée, qui présente un espace de support (22) pour l'échantillon (34) et une pièce de découpage (23).

2. Dispositif de caractérisation et de prélèvement d'échantillons selon la revendication 1, **caractérisé en ce que** le récipient d'échantillons (10) présente une pièce d'appui (25).

3. Dispositif de caractérisation et de prélèvement d'échantillons selon la revendication 2, **caractérisé en ce que** la pièce d'appui (25) est détachable du récipient d'échantillons (10).

4. Dispositif de caractérisation et de prélèvement d'échantillons selon la revendication 2 ou 3, **caractérisé en ce que** sur la pièce d'appui (25), un capuchon (40) est prévu pour le récipient d'échantillons (10).

5. Dispositif de caractérisation et de prélèvement d'échantillons selon une quelconque des revendications précédentes, **caractérisé en ce que** le récipient d'échantillons (10) présente une butée (38).

6. Dispositif de caractérisation et de prélèvement d'échantillons selon une quelconque des revendications précédentes, **caractérisé en ce que** la pièce à poinçon (14) est insérable dans une pince.

7. Dispositif de caractérisation et de prélèvement d'échantillons selon une quelconque des revendications précédentes, **caractérisé en ce que** le récipient d'échantillons (10) est insérable dans une pince.

8. Dispositif de caractérisation et de prélèvement d'échantillons selon une quelconque des revendications précédentes, **caractérisé en ce que** la pièce perforatrice (12) est insérable dans une pince.

9. Dispositif de caractérisation et de prélèvement d'échantillons selon une quelconque des revendications précédentes, **caractérisé en ce que** la pièce perforatrice (12) est applicable sur le récipient d'échantillons (10).

10. Pince destinée à raccorder une boucle auriculaire (12, 14) selon une quelconque des revendications précédentes et destinée à prélever un échantillon de tissu (34) au moyen d'un récipient d'échantillons (10) selon une quelconque des revendications précédentes
avec un support (13) pour la pièce à poinçon (14) et un support (9) pour le récipient d'échantillons (10).

11. Pince selon la revendication 10, **caractérisée par** un support (11) pour la pièce perforatrice (12).
